# EUROPEAN PATENT SPECIFICATION

(11) **EP 1 904 970 B1**
(45) Date of publication and mention of the grant of the patent: **18.02.2009**
(21) Application number: 06780026.8
(22) Date of filing: 10.07.2006
(51) Int. Cl.: G06T 1/00

(54) **A METHOD FOR EMBEDDING DATA**
VERFAHREN ZUR DATENEINBETTUNG
PROCEDE D'INCORPORATION DE DONNEES

(30) Priority: 14.07.2005 EP 05106482
(43) Date of publication of application: 02.04.2008
(73) Proprietor: Koninklijke Philips Electronics N.V., 5621 BA Eindhoven (NL)
(72) Inventor: VAN LEEST, Adriaan, J., NL-5656 AA Eindhoven (NL)
(74) Representative: Schouten, Marcus Maria
(86) International application number: PCT/IB2006/052320
(87) International publication number: WO 2007/007270

(56) References cited:
- WO-A-03/067886
- WO-A-20/04006168
- US-B1- 6 373 960
- RUI DU ET AL: "Lossless authentication of mpeg-2 video" PROCEEDINGS 2002 INTERNATIONAL CONFERENCE ON IMAGE PROCESSING. ICIP 2002. ROCHESTER, NY, SEPT. 22 - 25, 2002, INTERNATIONAL CONFERENCE ON IMAGE PROCESSING, NEW YORK, NY : IEEE, US, vol. VOL. 2 OF 3, 22 September 2002 (2002-09-22), pages 893-896, XP010608116 ISBN: 0-7803-7622-6

## Description

The present invention relates to a method of embedding data in an information signal.

Currently, it is easy to obtain and distribute digital data representing information signals (such as images and sounds) using networks of computers connected together, for example, via the Internet.

However, the facilitated distribution of data presents a problem for the owners of such data. For example, it is known for music files to be distributed and copied in violation of copyright laws; such distribution and copying results in the owners of the respective copyright not receiving the associated royalties. Similar problems occur with video files.

In order to prevent and detect such unauthorised copying and distribution, it is known to embed digital watermarks within information signals. Digital watermarks commonly include the name of the copyright owner, the identity of the purchaser and a tag such as "copy never", "copy-once" or "copy-no-more". The tags are used to prevent unauthorised copies from being created. For example, an MP3 audio file tagged "copy never" will prevent the MP3 file from being copied. Similarly, an MP3 audio file tagged "copy-once" will allow a single copy to be made. The new copy will be tagged "copy never" and the tag on the original MP3 file will be amended to be "copy-no-more".

Nowadays, watermarking techniques are seen in a wider perspective, in which a watermark is a message that is transmitted by an encoder to a decoder via a noisy channel. The noisy channel typically being a sound or image signal. On receipt, the decoder makes an estimate of the received message.

A known watermark embedding method embeds a watermark into MPEG 2 compressed data. The method comprises a bit-rate controller that maintains a cumulative tally of the difference between a number of bits in a non-watermarked slice and a number of bits in a corresponding watermarked slice. The bit-rate controller also ensures that the number of bits in the non-watermarked slice is greater than or equal to the number of bits in the watermarked slice. That is, the bit-rate controller is configured to ensure that the cumulative tally is always greater than or equal to zero.

At the start of the watermark embedding method the cumulative tally is zero. If, for example, a first chunk of a non-watermarked slice received by an embedding device is "100" and the act of embedding a watermark causes that first chunk (i.e. the first chunk of the corresponding watermarked slice) to become "1100", then the first chunk of the watermarked slice is larger than the first chunk of the non-watermarked slice by one (i.e. the cumulative tally has decreased by one). Thus, the cumulative tally will now be minus one. The bit-rate controller will as a result reject this change.

However, if the size of a slice of the watermarked stream, as compared to the size of the corresponding slice of the non-watermarked stream, had previously been reduced by one bit as a result of the watermarking process (i.e. the cumulative tally prior to the chunk was one), then the bit-rate controller would allow the change, as the watermarked stream would be equal in bit size to the original slice of the non-watermarked stream (i.e. the cumulative tally would be zero).

Such a method of embedding a watermark leads to a large number of additional bits caused by the watermarking process to be discarded, particularly at the start of each slice of an MPEG stream. As the additional bits are discarded, the signal strength of the watermark is lowered.

WO 03/067886 describes an alternative technique for strong, visible watermarking. A visible watermark is embedded in a MPEG2 bitstream by removing the DCT coefficients of macroblocks to be watermarked and replacing them with watermark coefficients.

The removed DCT coefficients are encrypted and stored in one or more user data spaces, which may be existing or added (zero-padding) stuffing bits. Should the removed coefficients exceed in size the space provided by these user data spaces, they may be appended at the end of the video sequence.

It is an object of an embodiment of the present invention to provide a method of embedding a watermark which obviates or mitigates the above-mentioned drawbacks.

In accordance with the present invention there is provided a method of embedding data in an information signal, the information signal comprising a first data portion of a first size and a second data portion of a second size, the method comprising: embedding said data in said first data portion, said embedding generating a modified first data portion of a modified size; and ensuring that if said modified size is greater than said first size, a difference between said modified size and said first size is not greater than said second size.

The method can therefore replace the data in the second data portion with data created as a result of embedding data. By taking into account the size of the second data portion at the outset, the size of the second data portion can be exploited. As a result, a watermark with a stronger signal strength can typically be achieved.

Preferably, the information signal comprises a plurality of segments. The first data portion and said second data portion may form part of a common segment of the information signal. In such a case segment size can be easily maintained.

Alternatively, the first data portion may form part of a first segment and said second data portion forming part of a second segment, wherein the first and second segments are different segments. The first segment preferably immediately precedes the second segment.

As the first and second data portions form part of different segments, said second size of the second data portion can be determined prior to analysing said first segment. In this way, a segment in which a watermark is to be embedded need not be analysed before embedding the data.

Preferably, the method further comprises: generating budget data, said budget data initially representing said second size. More preferably, said embedding comprises a plurality of embedding operations, wherein each embedding operation acts on at least part of said first data portion generating at least part of said modified first data portion. The method may further comprise recalculating said budget data after each embedding operation and ensuring that the budget data remains greater than or equal to zero. Advantageously, said embedding is configured to ensure that if said at least part of said modified first data portion is greater than said at least part of said first data portion, a difference between said at least part of said modified first data portion and said at least part of said first data portion is determined and compared to the budget data, wherein if the difference exceeds the budget data said at least part of said modified first data portion is rejected.

By recalculating the budget after each embedding operation, the effect of individual embedding operations may be rejected rather than the effect of all the embedding operations as a whole.

Embodiments of the present invention will now be described, by way of example only, with reference to the accompanying drawings, in which:-
Fig. 1 is a schematic illustration of an overview of the processes involved in digitising an analogue signal, compressing that signal into an MPEG stream, embedding a watermark in that signal in accordance with an embodiment of the present invention and decoding the compressed signal;
Fig. 2 is a schematic illustration of the processes involved in converting a video signal into an MPEG stream comprising I-frames;
Fig. 3A is a DCT array generated by digitising part of an image signal;
Fig. 3B shows run level pairs that represent the DCT block of fig. 3A;
Fig. 3C is the Huffman code equivalent to the run level pairs of fig. 3B;
Fig. 4 is a schematic illustration of components that form the watermark embedding device of fig. 1;
Fig. 5A is a schematic illustration of part of an MPEG stream;
Fig. 5B is a schematic illustration of part of a watermarked MPEG stream which corresponds to the part of the MPEG stream of fig. 5A; and
Fig. 6 is a schematic illustration of the processes involved in embedding a watermark into an MPEG stream.

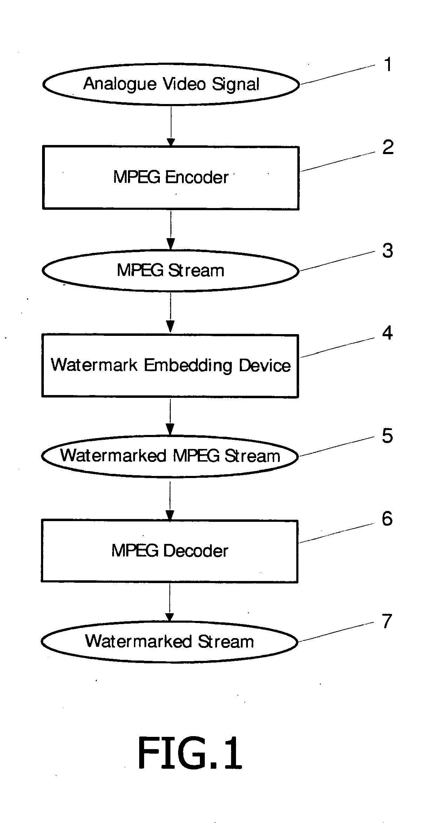

As shown in fig. 1, an analogue video signal 1 is received by an MPEG encoder 2. The MPEG encoder 2 digitises and compresses the analogue video signal 1 into an I-frame MPEG stream 3 (a data in a format created by the Moving Pictures Experts Group) for subsequent broadcast or storage. The MPEG stream 3 is received by a watermark embedding device 4. The watermark embedding device 4 embeds a watermark into the MPEG stream 3, generating a watermarked MPEG stream 5. The watermarked MPEG stream 5 is subsequently transmitted and/or retrieved, eventually being decoded by an MPEG decoder 6. The MPEG decoder 6 decompresses the watermarked MPEG stream 5, resulting in a watermarked stream 7 that is a reconstituted version of the original analogue video signal 1. The watermark is imperceptibly hidden within the stream so that users will not be able to detect its presence when viewing the reconstituted version of the original analogue video signal 1.

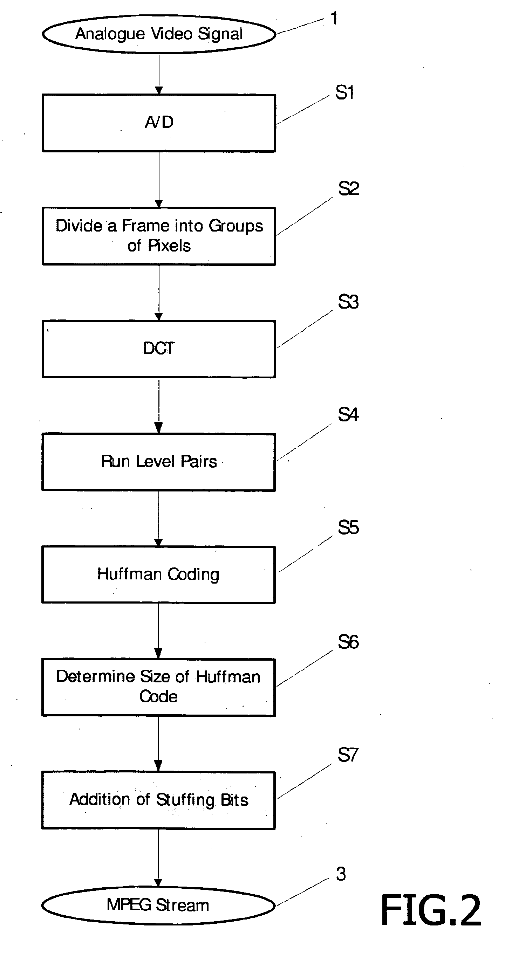

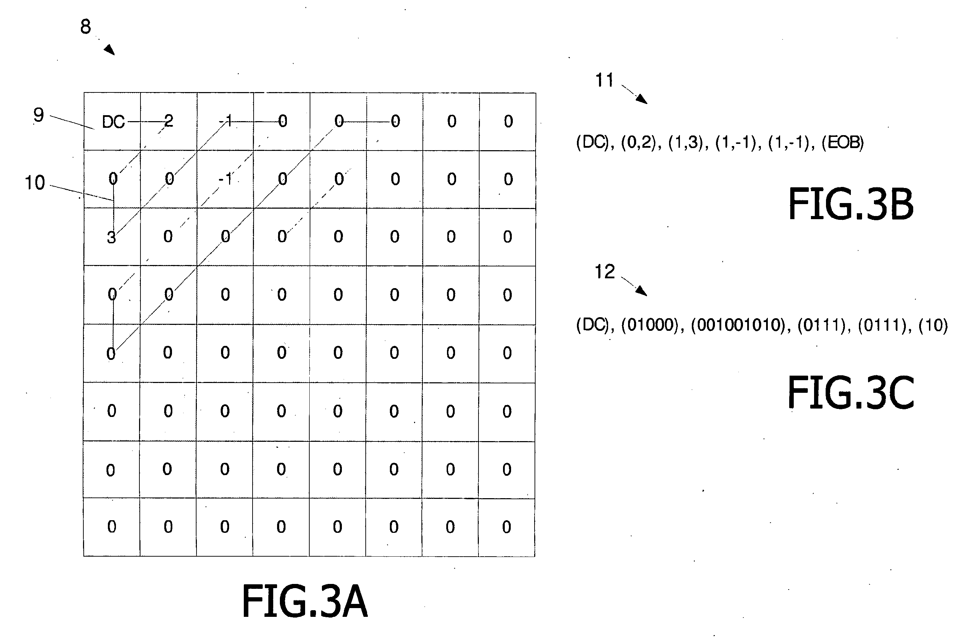

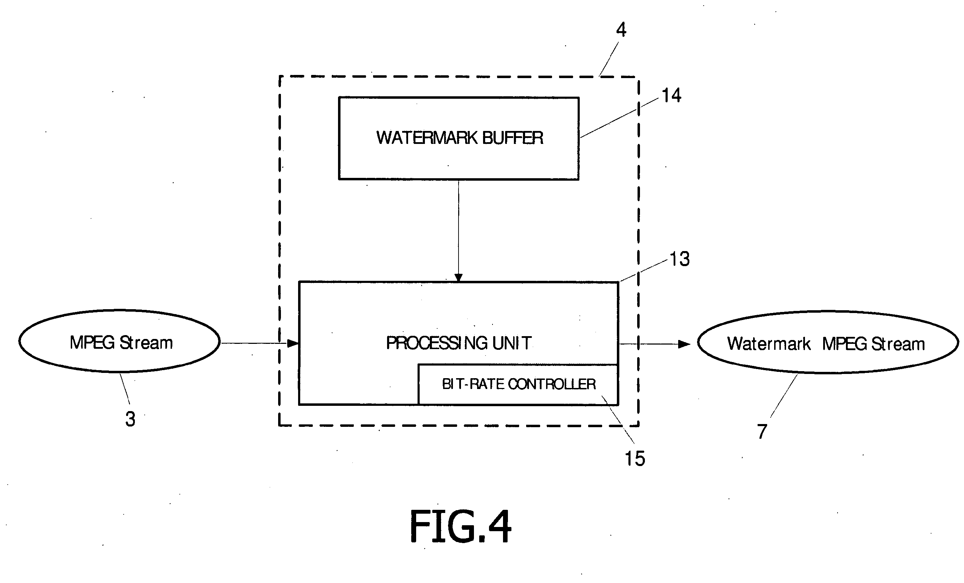

The process of digitising and compressing an analogue video signal 1 into an MPEG stream of I-frames will first be described in detail with reference to figures 2, 3A, 3B and 3C. The watermarking process will be subsequently described with reference to figures 4, 5A, 5B and 6. It will be understood by a person skilled in the art that the present invention can be used with MPEG streams comprising B- or P-frames.

In order to facilitate the distribution of digital data over networks it is known to use transforms such as discrete cosine transforms (DCT), discrete Fourier transforms (DFT) and discrete wavelet transforms (DWT).

A common way to compress video files is by using an MPEG compression technique. An MPEG compressed stream that is representative of video data is divided into frames which are grouped in group-of-pictures (GOPs), which facilitate random access to the MPEG stream. Each GOP consists of pictures. A frame consists of one or two pictures in interlaced video, or one picture in progressive video. Each picture in a GOP consists of slices, which are strings of consecutive macro blocks. Each macro block is composed of four (2x2) blocks of 8 x 8 luminance values and depending on the chrominance format eight, four or two blocks of chrominance samples for the 4:4:4, 4:2:2 and 4:2:0 chrominance format, respectively.

An MPEG standard compression technique generating 1-frames is depicted schematically in fig. 2 and corresponds to the operation of the MPEG encoder 2 on the analogue video signal 1. The first step of compressing a video signal is to perform digitisation to produce pixel chrominance and luminance values for a picture of the video data (step S1). The digitised picture is then divided into blocks of pixels (step S2).

A discrete cosine transform (DCT) is then carried out on each of the blocks individually at step S3 to extract spatial frequency coefficients, generating a DCT block of frequency component values for each block of luminance and chrominance values. Additionally at step S3, the generated DCT values are quantised. Fig. 3A shows a typical example of a DCT block 8. An upper left component 9 of each DCT block 8 represents average luminance of the corresponding pixel block and is commonly referred to as the DC component.

The components of the DCT block 8 are sequentially scanned in accordance with a zigzag pattern (denoted by reference numeral 10 in fig. 3A) and encoded into run level pairs 11 at step S4. A run level pair is two numbers, a first number being a number of zeros in series before reaching a non-zero figure and a second number being the value of that non-zero figure. For example, following the zigzag pattern 10 shown in fig. 3A, the first figure is a "2" after the DC component 9 (i.e. there are no "0"s and then a "2") so the corresponding run level pair is (0,2). Continuing along the zigzag pattern 10, there is one "0" and then a "3", so the corresponding run level pair is (1, 3).

Fig. 3B shows the run level pairs 11 that result from the DCT block of fig. 3A, an End-Of-Block code (EOB) denoting the absence of further non-zero coefficients in the DCT block 8.

The run level pairs 11 are subsequently coded into a binary Huffman code 12 at step S5. Fig. 3C shows the binary Huffman code 12 resulting from the DCT block 14 of fig. 3A and the run level pairs 11 of fig. 3B.

MPEG streams can be classified as having either a constant bit-rate (CBR) or a variable bit-rate (VBR).

CBR streams are at present used for streaming data over channels with limited capacity as such streams can be used to transfer data at the maximum bit rate of that channel. However, CBR does not allocate enough data for complex sections (resulting in degraded quality) and wastes data on simple sections. Thus, it is not a preferred choice for storing data. The variable length encoding schemes in MPEG compression techniques also make a CBR difficult to achieve. This is solved by inserting stuffing bits (one or more zeros) into the compressed code at the end of slices as appropriate.

Variable bit rate (VBR) encoding varies the bit-rate of the data encoded by an MPEG encoder in accordance with the complexity of the input data. The goal is to maintain constant quality instead of maintaining a constant bit-rate. VBR is preferred for storage (as opposed to streaming) because it makes better use of storage space. However, VBR encoding still requires the bit-rate to be maintained above a minimum rate. To prevent the bit-rate falling below a minimum bit-rate, the encoder again adds stuffing bits at the end of each slice.

For example, a VBR encoding scheme may have an average bit-rate of 8 megabits per second, a minimum bit-rate of 6 megabits per second and a maximum bit-rate of 10 megabits per second. However, if the video content to be encoded does not contain many objects and/or texture, the encoder may not be able to obtain the desired (minimum) bit-rate. To solve this problem, the encoder adds stuffing bits at the end of each slice to obtained the desired bit-rate. In practice, this happens frequently.

As shown in fig. 2, the binary Huffman code 12 (shown in fig. 3C) is analysed with the number of bits forming each slice being determined at step S6. If the size of the slice is insufficient for the desired bit-rate, stuffing bits are added at the end of the slice (step S7 of fig. 2).

MPEG compression is described in more detail in MPEG Video Compression Standard, edited by Joan Mitchell, William Pennebaker, Chad Fogg and Didier LeGall, published Chapman & Hall, 1997, which is incorporated herein by reference.

Referring back to fig. 1, the MPEG stream 3 is fed into the watermark embedding device 4 shown in fig. 4.

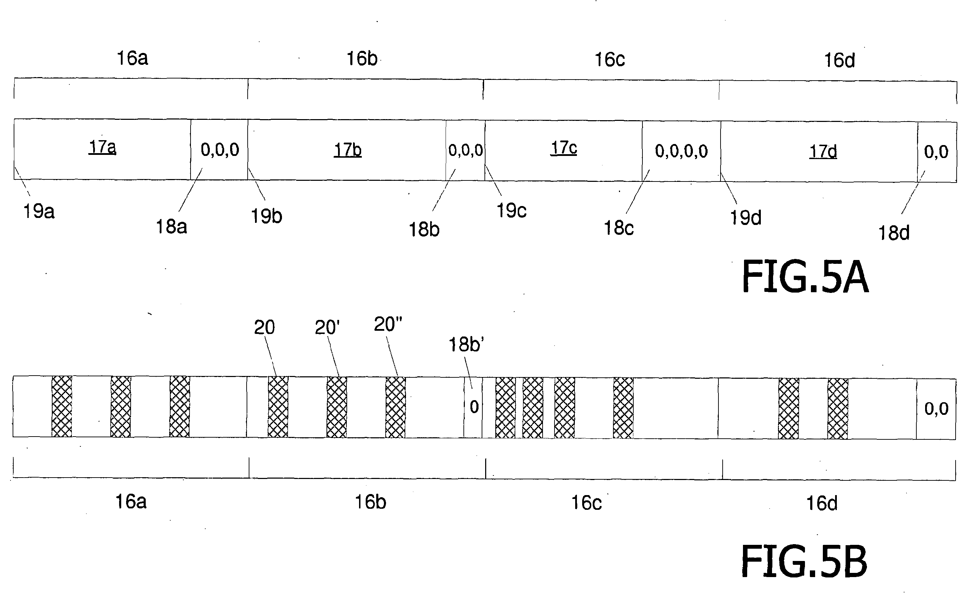

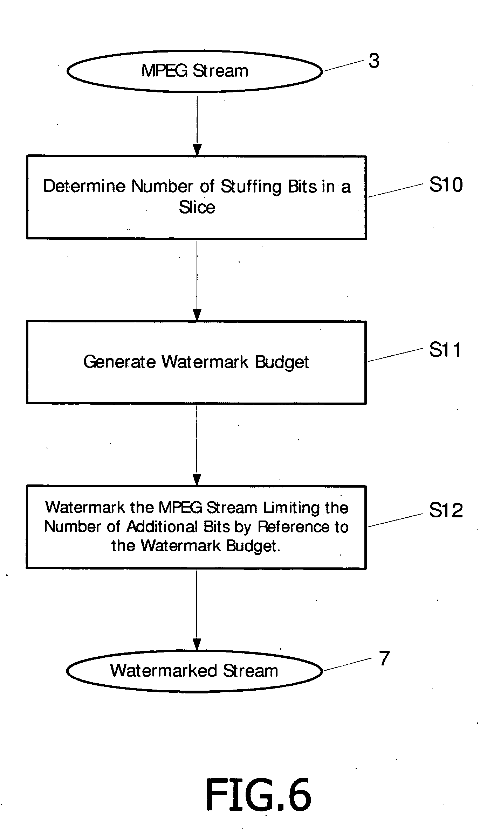

The components that form the watermark embedding device 4 will now be described in detail with reference to fig. 4, with the function of the watermark embedding device, and its components, being thereafter described with reference to figures 5A, 5B and 6.

As illustrated by fig. 4, the watermark embedding device 4 comprises a processing unit 13 and a watermark buffer 14. The processing unit 13 comprises a bit-rate controller 15. The processing unit 13 receives the MPEG stream 3, and embeds a watermark, so as to generate a watermarked MPEG stream 7. The processing unit 13 is connected to the watermark buffer 14. The watermark buffer 14 is a reserved segment of memory used to hold some of the MPEG stream 3 while it is being processed. The watermark buffer is used to store an advance supply of the MPEG stream to compensate for momentary delays.

Watermarks can be embedded into uncompressed data streams (the spatial domain) or can be embedded into compressed data streams (the transformed domain). It has been found that the strength of a watermark signal embedded in the spatial domain often decreases after subsequent compression of the data. It is therefore desirable to embed the watermark directly into compressed data streams.

As illustrated in fig. 1, the watermark embedding device 4 receives an MPEG stream 3 from the MPEG encoder 2. A section of the MPEG stream 3 is illustrated in fig. 5A. The illustrated section comprises four slices 16a, 16b, 16c, 16d representing the information signal. Each slice comprises data 17a, 17b, 17c, 17d representing the information signal in the form of Huffman coded encoded run level pairs, data 18a, 18b, 18c, 18d in the form of stuffing bits and a header 19a, 19b, 19c, 19d indicating the start of a slice. Fig. 5B is a schematic illustration of the slices 16a, 16b, 16c, 16d of the MPEG stream 3 of fig. 5A, after a watermark has been embedded by modifying selected coefficients and, as a result thereof, modifying the lengths of the corresponding run level pairs.

As shown by fig. 6, the processing unit 13 receives the MPEG stream 3 and analyses the stream at step S10 to determine a number of stuffing bits included in each slice. In this way, a watermark budget, equal to the number of stuffing bits, is generated for each slice at step S11.

The watermark budget is used to control the bit-rate controller 15 at step S12, so that the total number of additional bits caused by embedding the watermark in each slice is less than the watermark budget for that slice.

For example, fig. 5B illustrates the corresponding section of the watermarked MPEG stream to that illustrated in fig. 5A. Slice 16b of the MPEG stream has three stuffing bits 18b. The watermark budget for that slice is therefore set for 3. The bit-rate controller 15 will therefore allow the data portion 17b of the slice 16b to increase in bit size by 3 bits during the course of embedding a watermark. In the example shown, three additional bits 20, 20', 20" are introduced into the MPEG stream at various parts of the data portion 17b by embedding the watermark. If as a result of embedding the watermark, a further additional bit is be inserted, the watermark budget will be exceeded. As a result, the further additional bit will be rejected

The act of embedding a watermark may also decrease the value of a DCT coefficient. Generally, this results in a shorter Huffman coded run level pair. In the example of Fig. 5B, it has been assumed that the watermark embedding process causes one bit of data included in the non-watermarked slice to be excluded from the watermarked slice. As a result the watermark budget increases by one. A subsequent additional bit could now be inserted into the watermarked slice. However, since no such additional bit is to be inserted, one stuffing bit 18b' is maintained.

Thus, the act of embedding a watermark may cause some, all or none of the stuffing bits to be replaced without affecting the structure (i.e. the positions of the headers) of the compressed data.

The watermark budget for all of the slices of the MPEG stream can be determined at the outset, with the whole of the watermarked MPEG stream being subsequently generated.

Alternatively, a cycle of determining the watermark budget for a slice and then generating the corresponding slice of the watermarked MPEG stream can be established.

As illustrated in fig. 1, the watermarked MPEG stream 5 is then broadcast or stored until required. When required a standard MPEG decoder 6 can be used to obtain a reconstituted version of the original analogue video signal 1 in the form of a watermarked stream 7. Such MPEG decoders are well known in the art and will therefore not be described in detail here.

In an alternative embodiment, the stuffing bits from a previous slice can generate a watermark budget for the next slice so that the slice size and the position of the headers potentially change. For example, assume that a first slice includes ten stuffing bits at the end of the slice and a succeeding slice includes five stuffing bits. In such a case, a slice is not analysed until after a watermark has been embedded and so a watermark budget of zero is initially used. At the end of the first slice, there are ten stuffing bits, and so the watermark budget for the succeeding slice is 10. In the succeeding slice, a watermark budget of 5 is initially set, and so on.

An advantage of this approach is that there is no requirement to determine the number of stuffing bits in a slice prior to embedding the watermark. Although this embodiment operates such that the size of the watermarked slices will not necessarily be less than the size of the corresponding non-watermarked slices, this potential problem is mitigated by adding stuffing bits so as to prevent this from affecting the MPEG decoder.

Although, the position of slice headers will differ from the original stream, this is not a problem in practice. To prevent that the watermarked stream from lagging, the streams are synchronized for example just before each picture header (data that precedes a picture), by adding stuffing bits.

The invention can be summarized as follows. Watermarking schemes are known that embed the watermark directly in the MPEG domain. A requirement for these algorithms is that the watermarked MPEG stream does not increase in size. Therefore, a bit rate controller allows a modification of a DCT coefficient only if such modification does not increase the stream size. It happens frequently that DCT coefficients are skipped because of this requirement. As a direct consequence, the watermark energy is smaller than desired and therefore the watermark is less robust.

This invention exploits the fact that stuffing bits have often already been added to the stream by the MPEG encoder. The embedder is arranged to analyse the stream so as to find out how many stuffing bits there are at the end of the slice. The embedder can then embed the watermark immediately at the beginning of a slice. As a direct result, the watermark energy will increase and therefore the watermark will be more robust.

Although preferred embodiments of the present invention have been described above it will be appreciated that various modifications can be made to the invention without departing from the scope of the appended claims. In particular, the embodiments are described with reference to an arrangement for embedding a watermark in a video signal which is compressed in accordance with an MPEG standard. The present invention is, however, neither restricted to video signals nor to a particular compression standard. Although, the present invention is of particular use for watermarking data streams representative of audio or video files; it is envisaged that the present invention could be used to embed watermarks in other types of digital streams such as Digital Stream Digital (DSD) streams used by Super Audio Compact Discs (commonly referred to as SACD). The present invention can also be used to remark signals that already possess digital watermarks. It will further be understood that while the described embodiments relate to methods of embedding a watermark into a slice of a picture, the invention can also be used to embed a watermark directly into, for example, a picture (i.e. a watermark budget will be generated for a picture rather than a slice).

## Claims

1. A method of embedding data in an information signal, the information signal (16a-16d) comprising a first data portion (17a-17d) of a first size and a second data portion (18a-18d) of a second size, the method comprising:
- embedding said data in said first data portion, said embedding generating a modified first data portion of a modified size; and
- ensuring that if said modified size is greater than said first size, a difference between said modified size and said first size is not greater than said second size.

2. A method as claimed in claim 1, wherein the information signal comprises a plurality of segments.

3. A method as claimed in claim 2, wherein said first data portion and said second data portion form part of a common segment of the information signal.

4. A method as claimed in claim 2, wherein said first data portion forms part of a first segment of the information signal and said second data portion forms part of a second segment of the information signal, wherein the first and second segments are different segments.

5. A method as claimed in claim 4, wherein the segments of the information signal are ordered and said second segment immediately precedes said first segment.

6. A method as claimed in any of the preceding claims, further comprising:
generating budget data, said budget data initially representing said second size.

7. A method as claimed in claim 6, wherein said embedding comprises a plurality of embedding operations, wherein each embedding operation acts on at least part of said first data portion generating at least part of said modified first data portion.

8. A method as claimed in claim 7, the method further comprising recalculating said budget data after each embedding operation and ensuring that the budget data remains greater than or equal to zero.

9. A method as claimed in claim 8, wherein said embedding is configured to ensure that if said at least part of said modified first data portion is greater than said at least part of said first data portion, a difference between said at least part of said modified first data portion and said at least part of said first data portion is not greater than said budget data.

10. A method as claimed in any of the preceding claims, wherein said first data portion comprises compressed data

11. A method as claimed in any of the preceding claims, wherein the data to be embedded is a watermark.

12. A carrier medium carrying computer readable code for controlling a computer to carry out the method of any one of claims 1 to 11.

13. A computer apparatus for embedding a watermark in an information signal, the apparatus comprising:
- a program memory storing processor readable instructions; and
- a processor configured to read and execute instructions stored in said program memory;
wherein the processor readable instructions comprise instructions controlling the processor to carry out the method of any one of claims 1 to 11.

14. A computer apparatus for embedding a watermark in an information signal (16a-16d), the information signal comprising a first data portion (17a-17d) of a first size and a second data portion (18a-18d) of a second size, the apparatus comprising:
- a processing unit that embeds the watermark and thereby generates a modified first data portion of a modified size; and
- a bit-rate controller that ensures that if said modified first data portion is greater than said first size, a difference between said modified size and said first size is not greater than said second size.

## Patentansprüche

1. Verfahren zum Einbetten von Daten in ein Informationssignal, wobei das Informationssignal (16a - 16d) einen ersten Datenteil (17a - 17d) einer ersten Größe und einen zweiten Datenteil (18a - 18d) einer zweiten Größe aufweist, wobei das Verfahren die nachfolgenden Verfahrensschritte umfasst;
- das Einbetten der genannten Daten in den genannten ersten Datenteil, wobei das genannte Einbetten einen modifizierten ersten Datenteil einer modifizierten Größe erzeugt; und
- das Gewährleisten, dass, wenn die genannte modifizierte Größe größer ist als die genannte erste Größe eine Differenz zwischen der genannten modifizierten Größe und der genannten ersten Größe nicht größer ist als die genannte zweite Größe.

2. Verfahren nach Anspruch 1, wobei das Informationssignal eine Anzahl Segmente aufweist.

3. Verfahren nach Anspruch 2, wobei der genannte erste Datenteil und der genannte zweite Datenteil einen Teil eines gemeinsamen Segmentes des Informationssignals bilden.

4. Verfahren nach Anspruch 2, wobei der genannte erste Datenteil einen Teil eines ersten Segmentes des Informationssignals bildet und der genannte zweite Datenteil einen Teil eines zweiten Segmentes des Informationssignals bildet, wobei das erste und das zweite Segment verschiedene Segmente sind.

5. Verfahren nach Anspruch 4, wobei die Segmente des Informationssignals geordnet werden und das genannte zweite Segment dem genannten ersten Segment unmittelbar vorhergeht.

6. Verfahren nach einem der vorstehenden Ansprüche, wobei das Verfahren weiterhin Folgendes umfasst:
- das Erzeugen von Budgetdaten, die anfangs die genannte zweite Größe darstellen.

7. Verfahren nach Anspruch 6, wobei das genannte Einbetten eine Anzahl Einbettungsvorgänge umfasst, wobei jeder Einbettungsvorgang auf wenigstens einen Teil des genannten ersten Datenteils, der wenigstens einen Teil des genannten modifizierten ersten Datenteils erzeugt, einwirkt.

8. Verfahren nach Anspruch 7, wobei das Verfahren weiterhin das Neuberechnen der genannten Budgetdaten nach jedem Einbettungsvorgang umfasst sowie das Gewährleisten, dass die Budgetdaten nach wie vor größer als Null oder gleich Null sind.

9. Verfahren nach Anspruch 8, wobei das genannte Einbetten durchgeführt wird um zu gewährleisten, dass, wenn wenigstens ein Teil des genannten modifizierten ersten Datenteils größer ist als wenigstens ein Teil des genannten ersten Datenteils, eine Differenz zwischen wenigstens einem Teil der genannten modifizierten ersten Datenteil und wenigstens einem Teil des genannten ersten Datenteils nicht größer ist als die genannten Budgetdaten.

10. Verfahren nach einem der vorstehenden Ansprüche, wobei der genannte erste Datenteil komprimierte Daten enthält.

11. Verfahren nach einem der vorstehenden Ansprüche, wobei die einzubettenden Daten ein Wasserzeichen sind.

12. Trägermedium, das einen vom Computer auslesbaren Code zur Steuerung eines Computers trägt zum Durchführen des Verfahrens nach einem der Ansprüche 1 bis 11.

13. Computeranordnung zum Einbetten eines Wasserzeichens in ein Informationssignal, wobei diese Anordnung Folgendes umfasst:
- einen Programmspeicher, der von Prozessor auslesbare Instruktionen speichert, und
- einen Prozessor, vorgesehen zum Auslesen und Durchführen in dem genannten Programmspeicher gespeicherter Instruktionen;
wobei die vom Prozessor auslesbaren Instruktionen Instruktionen aufweisen, die den Prozessor derart steuern, dass er das Verfahren nach einem der Ansprüche 1 bis 11 durchführt.

14. Computeranordnung zum Einbetten eines Wasserzeichens in ein Informationssignal (16a - 16d), wobei dieses Informationssignal einen ersten Datenteil (17a - 17d) einer ersten Größe und einen zweiten Datenteil (18a - 18d) einer zweiten Größe aufweist, wobei die Anordnung Folgendes umfasst:
- eine Verarbeitungseinheit, die das Wasserzeichen einbettet und **dadurch** einen modifizierten ersten Datenteil einer modifizierten Größe erzeugt; und
- einen Bitratencontroller, der gewährleistet, dass, wenn der genannte modifizierte erste Datenteil größer ist als die genannte erste Größe, eine Differenz zwischen der genannten modifizierten Größe und der genannten ersten Größe nicht größer ist als die genannte zweite Größe.

## Revendications

1. Procédé d'incorporation de données à un signal d'information, le signal d'information (16a - 16d) comprenant une première partie de données (17a - 17d) d'une première taille et une deuxième partie de données (18a - 18d) d'une deuxième taille, le procédé comprenant les étapes consistant à :
- incorporer lesdites données à ladite première partie de données, ladite incorporation générant une première partie de données modifiée d'une taille modifiée ; et
- s'assurer que si ladite taille modifiée est supérieure à ladite première taille, une différence entre ladite taille modifiée et ladite première taille n'est pas supérieure à ladite deuxième taille.

2. Procédé selon la revendication 1, dans lequel le signal d'information comprend une pluralité de segments.

3. Procédé selon la revendication 2, dans lequel ladite première partie de donnée et ladite deuxième partie de données font partie d'un segment commun du signal d'information.

4. Procédé selon la revendication 2, dans lequel ladite première partie de données fait partie d'un premier segment du signal d'information et ladite deuxième partie de données fait partie d'un deuxième segment du signal d'information, dans lequel les premier et deuxième segments sont des segments différents.

5. Procédé selon la revendication 4, dans lequel les segments du signal d'information sont ordonnés et ledit deuxième segment précède immédiatement ledit premier segment.

6. Procédé selon l'une quelconque des revendications précédentes, comprenant en outre l'étape consistant à : générer des données de budget, lesdites données de budget représentant initialement ladite deuxième taille.

7. Procédé selon la revendication 6, dans lequel ladite incorporation comprend une pluralité d'opérations d'incorporation, dans lequel chaque opération d'incorporation agit sur au moins une partie de ladite première partie de données en générant au moins une partie de ladite première partie de données modifiée.

8. Procédé selon la revendication 7, le procédé comprenant en outre l'étape consistant à recalculer lesdites données de budget après chaque opération d'incorporation et à s'assurer que les données de budget restent supérieures ou égales à zéro.

9. Procédé selon la revendication 8, dans lequel ladite incorporation est configurée pour s'assurer que si ladite au moins une partie de ladite première partie de données modifiée est supérieure à ladite au moins une partie de ladite première partie de données, une différence entre ladite au moins une partie de ladite première partie de données modifiée et ladite au moins une partie de ladite première partie de données n'est pas supérieure aux dites données de budget.

10. Procédé selon l'une quelconque des revendications précédentes, dans lequel ladite première partie de données comprend des données compressées.

11. Procédé selon l'une quelconque des revendications précédentes, dans lequel les données à incorporer sont un filigrane.

12. Support porteur portant un code lisible par ordinateur pour commander à un ordinateur d'effectuer le procédé selon l'une quelconque des revendications 1 à 11.

13. Appareil informatique pour incorporer un filigrane à un signal d'information, l'appareil comprenant :
- une mémoire de programme stockant des instructions lisibles par processeur ; et
- un processeur configuré pour lire et exécuter des instructions stockées dans ladite mémoire de programme ;
dans lequel les instructions lisibles par processeur comprennent des instructions commandant au processeur d'effectuer le procédé selon l'une quelconque des revendications 1 à 11.

14. Appareil informatique pour incorporer un filigrane à un signal d'information (16a - 16d), le signal d'information comprenant une première partie de données (17a - 17d) d'une première taille et une deuxième partie de données (18a - 18d) d'une deuxième taille, l'appareil comprenant :
- une unité de traitement qui incorpore le filigrane et génère de ce fait une première partie de données modifiée d'une taille modifiée ; et
- un contrôleur de débit binaire qui s'assure que si ladite première partie de données modifiée est supérieure à ladite première taille, une différence entre ladite taille modifiée et ladite première taille n'est pas supérieure à ladite deuxième taille.
